# EUROPÄISCHE PATENTSCHRIFT

(11) **EP 2 199 316 B1**
(45) Veröffentlichungstag und Bekanntmachung des Hinweises auf die Patenterteilung: **31.08.2011**
(21) Anmeldenummer: 09178960.2
(22) Anmeldetag: 11.12.2009
(51) Int. Cl.: C08G 77/06, B29B 7/46, B29B 7/48, C08J 3/20

(54) **Kontinuierliches Verfahren zur Herstellung von Grundmassen für Siliconzusammensetzungen mit verbesserter Stabilität**
Continuous process for the production of silicone compositions with improved stability
Procédé continu de production de composition silicone plus stable

(30) Priorität: 19.12.2008 DE 102008055035
(43) Veröffentlichungstag der Anmeldung: 23.06.2010
(73) Patentinhaber: Wacker Chemie AG, 81737 München (DE)
(72) Erfinder: Frese, Thomas, 84489, Burghausen (DE); Hierstetter, Thomas, 84489, Burghausen (DE); Schuster, Johann, 84547, Emmerting (DE); Wörner, Christof, 84489, Burghausen (DE)
(74) Vertreter: Mieskes, Klaus Theoderich

(56) Entgegenhaltungen:
- EP-A1- 0 807 509
- GB-A- 2 384 488
- US-A1- 2006 140 048
- US-B2- 6 749 786

## Beschreibung

Die vorliegende Erfindung betrifft ein kontinuierliches Verfahren zur Herstellung von Grundmassen für additionsvernetzende Siliconzusammensetzungen, die eine verbesserte Stabilität gegenüber Viskositätsanstieg, SiH-Abbau, Änderung der Reaktivität sowie Additivabbau nach Lagerung aufweisen.

Dem Fachmann auf dem Gebiet der Siliconelastomere ist bekannt, dass Füllstoff-haltige Siliconzusammensetzungen wie beispielsweise Flüssigsiliconkautschuke (LSR= Liquid Silicone Rubber) zu einem überwiegenden Anteil aus Grundmassen aufgebaut sind. Für die Herstellung von Flüssigsiliconkautschuken werden Grundmassen mit einem Vulkanisationsagens sowie mit weiteren typischen Bestandteilen von additionsvernetzenden Siliconzusammensetzungen homogen miteinander vermischt, die zur Einstellung bestimmter Endeigenschaften der nach der Vulkanisation erhaltenen Siliconelastomere dienen.

In Anlehnung an den Stand der Technik werden zur Herstellung von Grundmassen entweder vorhydrophobierte Füllstoffe eingesetzt, die zusammen mit entsprechenden Organopolysiloxanen homogen miteinander vermischt und geknetet werden. Ein anderer Weg zur Herstellung von Grundmassen besteht in der Verwendung von hydrophilen Füllstoffen, die während des sog. Compoundiervorgangs unter Verwendung von geeigneten Behandlungsmitteln in-situ hydrophobiert werden. In beiden Fällen erfolgt der Einarbeitungsvorgang üblicherweise in einem Planetendissolver oder Kneter, wie beispielsweise Sigma-Kneter oder Doppelmuldenkneter, die für ein kontinuierliches Herstellverfahren grundsätzlich ungeeignet sind. Die beschriebenen Batch-Verfahren, hier insbesondere der in-situ-Prozess, zeichnen sich durch eine ungünstige Raumzeitausbeute, einen hohen Energieverbrauch und der Notwendigkeit des Einsatzes von Schutzgas aufgrund der Gefahr der Bildung explosiver Gemische aus und sind zudem sehr kapital- und arbeitsintensiv. In diskontinuierlichen Knetern können Siliconzusammensetzungen aus Grundmassen, bestehend aus Organopolysiloxanen und vorhydrophobierten oxidischen verstärkenden Füllstoffen, mit hoher Lagerstabilität hergestellt werden, wobei sich die auf Basis dieser Grundmassen hergestellten Siliconelastomere durch ein sehr ausgewogenes mechanisches Eigenschaftsprofil auszeichnen.

Im Stand der Technik sind zahlreiche Technologien bekannt, um Siliconzusammensetzungen über kontinuierliche Verfahrensschritte herzustellen. Die kontinuierlichen Verfahrensschritte können sich dabei sowohl auf die kontinuierliche Herstellung von Grundmassen als auch auf die kontinuierliche Herstellung von fertigen Siliconzusammensetzungen beziehen, wobei Letztere in den meisten Fällen aus einer oder wenigstens zwei Komponenten bestehen.

Siliconzusammensetzungen, die aus kontinuierlich hergestellten Grundmassen aufgebaut sind und bei denen vorhydrophobierte Füllstoffe eingesetzt werden, weisen in der Regel eine verminderte Stabilität im Vergleich zu Siliconzusammensetzungen auf, die diskontinuierlich hergestellte Grundmassen enthalten.

Aufgrund einer vergleichsweise geringen Verweilzeit des Organopolysiloxans und des Füllstoffs bei kontinuierlichen Verfahren zur Herstellung von Grundmassen wird oftmals ein nicht vollständiger Aufschluss der Füllstoffagglomerate erreicht, was zu Inhomogenitäten im Siliconelastomer oder zu einer schlechten Transparenz führen kann, wie dies in EP 1 203 650 B1 bereits angeführt wird.

Die angesprochene verminderte Stabilität der gemäß dem Stand der Technik aus kontinuierlich hergestellten Grundmassen hergestellten Siliconzusammensetzungen kann sich beispielsweise in Form eines Anstiegs der Viskosität der Siliconzusammensetzungen nach Lagerung manifestieren, wobei dies insbesondere bei erhöhten Temperaturen auftritt, wie beispielsweise beim Transport der Siliconzusammensetzungen.

Aufgrund einer vergleichsweise geringen Verweilzeit der Organopolysiloxane und des Füllstoffs bei kontinuierlichen Verfahren zur Herstellung von Grundmassen kann dies auch zu einer unzureichenden Desaktivierung der Füllstoffoberfläche führen, woraus sich die Möglichkeit von unerwünschten Reaktionen in der fertigen Siliconzusammensetzung ergeben kann. Beispielsweise kann für den Fall der Verwendung von Organohydrogenpolysiloxanen als Vernetzer in den fertigen Siliconzusammensetzungen ein verstärkter Abbau von SiH-Gruppen unter Wasserstoffentwicklung beobachtet werden. Dies birgt ein nicht unerhebliches Explosionsrisiko bei Gegenwart von Sauerstoff. Zudem besteht die Gefahr einer Änderung des Eigenschaftsprofils der nach der Vulkanisation erhaltenen Siliconelastomere, aufgrund einer damit einhergehenden Änderung der Netzwerkarchitektur. Des Weiteren kann eine nicht ausreichend desaktivierte Füllstoffoberfläche bei selbsthaftenden Siliconzusammensetzungen zu unerwünschten Reaktionen reaktiver Gruppen an der Füllstoffoberfläche mit Additiven wie z. B. Haftvermittlern führen, was zwangsläufig zu einer Verschlechterung der Haftungseigenschaften führt.

In EP 0 462 032 A1 wird ein kontinuierliches in-situ-Verfahren zur Herstellung von Grundmassen beschrieben, die sich zur Herstellung von Siliconzusammensetzungen eignen, welche über eine Polyadditionsreaktion vernetzbar sind. Die Compoundierung erfolgt in einem Doppelschneckenextruder durch kontinuierliche und gleichzeitige Zudosierung eines Vinyl-Gruppen tragenden Organopolysiloxans, eines Füllstoffs sowie eines flüssigen Polysilazans und Wasser.

In EP 0 776 751 A1 wird ein kontinuierliches in-situ-Verfahren zur Herstellung von Grundmassen beschrieben, bei dem die Grundmasse in einer biaxial kontinuierlich extrudierenden und mischenden Maschine hergestellt wird. Die biaxial kontinuierlich extrudierende und mischende Maschine weist ein zweilumiges Einlassrohr auf, über die das Hydrophobierungsmittel bestehend aus hydrolysierbarer Organosiliciumverbindung und Wasser, sowie der Füllstoff über das äußere Lumen und das Organopolysiloxan über das innere Lumen zudosiert werden.

Die US 6,749,786 B2 beschreibt ein kontinuierliches in-situ-Verfahren zur Herstellung von Grundmassen für Flüssigsiliconkautschuke (LSR) mit geringem Flüchtigengehalt, bei dem ein Extruder mit einem L/D-Verhältnis (Länge zu Durchmesser) von wenigstens größer 70 Verwendung findet. Die Entgasung erfolgt an mehreren Öffnungen, die kurz vor dem Auslass des Extruders positioniert sind.

Alle beschriebenen in-situ-Verfahren weisen den Nachteil hoher Emissionen auf (Abgasproblematik), die an jeder Knetmaschine auftreten und nur schwer beherrschbar sind. Des Weiteren ist bei kontinuierlichen in-situ-Verfahren eine gezielte Steuerung der Hydrophobierung nur in begrenztem Umfang möglich, so dass eine relativ hohe Schwankung der Produktqualität festgestellt werden kann. Ein weiterer Nachteil von in-situ-Verfahren begründet sich in dem bestehenden Risiko der Bildung von zündfähigen Gemischen.

EP 0 807 509 A1, offenbart die kontinuierliche Herstellung von lagerstabilen additionsvernetzenden Flüssigsiliconkautschuken unter Verwendung einer speziellen Knetmaschinenkaskade. Dabei erfolgt die Entgasung der mittels der Knetmaschine hergestellten Grundmassen über einen einfachen Entgasungsbehälter, der jedoch keine Nachbehandlung der Grundmasse über eine speziell konzipierte Nachbehandlungsvorrichtung mit Scherkrafteintrag und hoher mittlerer Verweilzeit umfasst. Die aus diesen Grundmassen hergestellten Siliconzusammensetzungen zeichnen sich bereits durch eine gute Stabilität hinsichtlich Viskositätsanstieg bei Lagerung aus, jedoch ist dies noch verbesserungsbedürftig, da nach wie vor ein störender Viskositätsanstieg festgestellt werden kann, der zu einer Verringerung der Haltbarkeit der fertigen Siliconzusammensetzungen führt. Bei Flüssigsiliconkautschuken kann eine erhöhte Viskosität zu Problemen bei der Verarbeitung im Spritzgießprozess führen, was auf die geänderten rheologischen Eigenschaften zurückgeführt wird. Ein weiteres dem Fachmann bekanntes Problem kann beispielsweise auch an Dosiervorrichtungen auftreten, wenn die Viskosität aufgrund einer unzureichenden Lagerstabilität einen zu hohen Wert aufweist. Des Weiteren besteht noch ein erheblicher Verbesserungsbedarf bei der Stabilität der aus diesen Grundmassen hergestellten Siliconzusammensetzungen hinsichtlich SiH-Abbau und Abbau von Additiven wie beispielsweise Haftvermittlern oder organisch basierten Stabilisatoren. Ein weiterer Nachteil des in EP 0 807 509 A1 beschriebenen Verfahren ist, dass mit diesem kontinuierlichen Verfahren Volumenströme von maximal 300 kg/h realisiert werden können. Bei höheren Durchsätzen kann bereits eine deutliche Verschlechterung der Stabilität der Grundmassen beobachtet werden.

Zusammenfassend kann festgestellt werden, dass keines der bislang bekannten kontinuierlichen Verfahren zur Herstellung von Grundmassen für Siliconzusammensetzungen in befriedigender Weise den Anforderungen gerecht wird, die an derartige Siliconzusammensetzungen, insbesondere Flüssigsiliconkautschuke, die im Spritzguss verarbeitet werden, gestellt werden.

Der vorliegenden Erfindung liegt daher die Aufgabe zugrunde, den Stand der Technik zu verbessern und ein kontinuierliches Verfahren zur Herstellung einer aus vorhydrophobiertem oxidischen verstärkenden Füllstoff und Organopolysiloxanen bestehenden Grundmasse bereitzustellen, aus denen fertige additionsvernetzende Flüssigsiliconkautschukzusammensetzungen hergestellt werden, die den folgenden Anforderungen gerecht werden:
- hohe Stabilität gegenüber Viskositätsanstieg bei Lagerung, insbesondere bei erhöhten Temperaturen,
- hohe Stabilität gegenüber Reaktivitätsverlust, d. h. möglichst keine oder nur eine geringe Änderung der Vernetzungscharakteristik bei Lagerung,
- hohe Stabilität gegenüber unerwünschten Reaktionen mit Additiven, wie beispielsweise Haftvermittlern oder Stabilisatoren,
- leichte Entformbarkeit aus insbesondere metallischen Vulkanisationsformen unmittelbar nach der Vulkanisation,
- hohes Niveau der Gebrauchseigenschaften wie Transparenz, und mechanisches Eigenschaftsprofil wie insbesondere Weiterreißwiderstand, Reißfestigkeit, Reißdehung und Druckverformungsrest.

Eine weitere Aufgabe lag darin ein Verfahren zur Verfügung zu stellen bei dem Volumenströme von mehr als 300 kg/h möglich sind.

Ein Gegenstand der vorliegenden Erfindung ist daher ein Verfahren zur Herstellung von Grundmassen, mit einer Viskosität von 500.000 bis 12.000.000 mPa*s, gemessen bei 25°C und einer Scherrate von 1 s⁻¹, bei dem
- mindestens ein Diorganopolysiloxan (A) der allgemeinen Formel (I)

   R¹ₐR²_{b}SiO_{(4-a-b)/2} (I),

   wobei,
   - **R¹**: Hydroxylrest oder einen monovalenten, gegebenenfalls halogensubstituierten, gegebenenfalls O-, N-, S-, oder P- Atome enthaltenden Kohlenwasserstoffrest mit 1 bis 20 Kohlenstoffatomen, der frei von aliphatisch ungesättigten Gruppen ist,
   - **R²**: einen monovalenten, aliphatisch ungesättigten, gegebenenfalls halogensubstituierten, gegebenenfalls O-, N- , S-, oder P-Atome enthaltenden Kohlenwasserstoffrest mit 2 bis 10 Kohlenstoffatomen,
   - **b**: Werte von 0,0001 bis 2,
   bedeuten,
   mit der Maßgabe, dass 1.5<(**a+b**)≤3.0, und dass pro Molekül durchschnittlich mindestens zwei aliphatisch ungesättigte Reste **R²** enthalten sind und dass die bei 25°C bestimmte Viskosität der Diorganopolysiloxane (A) 1 bis 40.000.000 mPa*s beträgt,
   mit
- mindestens einem vorhydrophobierten oxidischen verstärkenden Füllstoff (B) mit einem durch die Hydrophobierung erhaltenen Kohlenstoffgehalt von mindestens 0,5 Gew.-%,
in einer ersten Verfahrensstufe in einer Knetkaskade (1) mit wenigstens zwei in Reihe nebeneinander angeordneten Knetkammern (2), die jeweils zwei achsparallele, gleich- oder gegensinnig angetriebene Knetwerkzeuge (3) enthalten und die durch quer zu den Achsen (4) der Knetwerkzeuge (3) passierbare Öffnungen (5) miteinander verbunden sind, wobei mindestens die erste Knetkammer eine Beschickungsöffnung (6) und die letzte Knetkammer eine Austragsöffnung (7) aufweisen, homogen miteinander vermischt und geknetet werden,
und die so erhaltene Masse
in einer zweiten nachgeschalteten Verfahrensstufe einer Nachbehandlung in einer Rührvorrichtung (8) unterworfen wird, die über eine Beschickungsöffnung (9) verfügt, über welche die über die erste Verfahrensstufe hergestellte Masse mit einem definierten Volumenstrom X der Rührvorrichtung zugeführt, unter fortwährender Erneuerung der Oberfläche (14) unter Einsatz von rotierenden Misch-/Knetwerkzeugen (10) sowie optional Abstreifern (19) mit Scherkraft beaufschlagt und entgast, und über eine Austragsöffnung (11) mit dem Volumenstrom Y aus der zweiten Verfahrensstufe ausgeschleust wird.

Beispiele für die Reste R¹ mindestens eines Diorganopolysiloxans (A) sind Alkylreste, wie Methyl-, Ethyl-, Propyl-, Isopropyl-, tert.-Butyl-, n-Pentyl-, iso-Pentyl-, neoPentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie halogenierte und mit organischen Gruppen funktionalisierte Derivate der voranstehenden Reste, wie 3,3,3-Trifluorpropyl-, 3-Iodopropyl-, 3-Isocyanatopropyl-, Aminopropyl-, Methacryloxymethyl- oder Cyanoethylrest.

Bevorzugte Reste R¹ enthalten 1 bis 10 Kohlenstoffatome sowie gegebenenfalls Halogensubstituenten. Besonders bevorzugte Reste R¹ sind Methyl-, Phenyl- und 3,3,3-Trifluorpropylrest, insbesondere der Methylrest.

Die Reste R² sind einer Hydrosilylierungsreaktion zugänglich. Beispiele hierfür sind Alkenyl- und Alkinylreste, wie Vinyl-, Allyl-, Isopropenyl-, 3-Butenyl-, 2,4-Pentadienyl-, Butadienyl- , 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Alkenylarylreste, wie Styryl- oder Styrylethylrest, sowie halogenierte und Heteroatome enthaltende Derivate der voranstehenden Reste, wie 2-Bromvinyl-, 3-Brom-1-propinyl-, 1-Chlor-2-methylallyl-, 2-(Chlormethyl)allyl-, Styryloxy-, Allyloxypropyl-, 1-Methoxyvinyl-, Cyclopentenyloxy-, 3-Cyclohexenyloxy-, Acryloyl- , Acryloyloxy-, Methacryloyl- oder Methacryloyloxyrest. Bevorzugte Reste R² sind Vinyl-, Allyl- und 5-Hexenylrest, insbesondere der Vinylrest.

Bei dem Diorganopolysiloxan (A) der allgemeinen Formel (I) beträgt die bei 25°C bestimmte Viskosität vorzugsweise 1 bis 40.000.000 mPa*s, besonders bevorzugt 1 bis 8.000.000 mPa*s, insbesondere 1 bis 800.000 mPa*s.

Das Diorganopolysiloxan (A) der allgemeinen Formel (I) kann ein Diorganopolysiloxan mit einer monomodalen oder multimodalen Molekulargewichtsverteilung sein, oder Mischungen aus verschiedenen Diorganopolysiloxanen mit monomodaler oder multimodaler Molekulargewichtsverteilung.

Das Diorganopolysiloxan (A) der allgemeinen Formel (I) weist vorzugsweise durchschnittlich 1 bis 15, besonders bevorzugt durchschnittlich 1 bis 10, insbesondere durchschnittlich 1 bis 4 monovalente, aliphatisch ungesättigte, gegebenenfalls halogensubstituierte, gegebenenfalls O-, N-, S-, oder P-Atome enthaltende Kohlenwasserstoffreste mit 2 bis 10 Kohlenstoffatomen, auf.

Beispiele für das Diorganopolysiloxan (A) der allgemeinen Formel (I) sind lineare, verzweigte und zyklische Diorganopolysiloxane, wobei diese vorzugsweise aus Einheiten der Formeln (CH₃)₃SiO_{1/2}, (H₂C=CH)(CH₃)₂SiO_{1/2}, (CH₃)₂SiO_{2/2}, (H₂C=CH)(CH₃)SiO_{2/2} oder aus deren Mischungen bestehen.

Bevorzugte Ausführungsformen der Diorganopolysiloxane (A) sind Copolymere enthaltend (H₂C=CH)(CH₃)SiO_{2/2}- und (CH₃)₂SiO_{2/2}-Einheiten, aufweisend (CH₃)₃SiO_{1/2}-Endgruppen, Copolymere enthaltend (CH₃)₂SiO_{2/2}-Einheiten, aufweisend (H₂C=CH)(CH₃)₂SiO_{1/2}-Endgruppen, Copolymere enthaltend (H₂C=CH)(CH₃)SiO_{2/2}- und (CH3)₂SiO_{2/2}-Einheiten, aufweisend (H₂C=CH)(CH₃)₂SiO_{1/2}-Endgruppen, Copolymere enthaltend (CH₃)₂SiO_{2/2}-Einheiten, aufweisend (CH₃)₃SiO_{1/2}-Endgruppen,
Copolymere enthaltend (Ph)₂SiO_{2/2}- und (H₂C=CH)(CH₃)SiO_{2/2}-Einheiten, aufweisend (CH₃)₃SiO_{1/2}-Endgruppen, Copolymere enthaltend (Ph)₂SiO_{2/2}-, (CH₃)₂SiO_{2/2}- und (H₂C=CH) (CH₃)SiO_{2/2}-Einheiten, aufweisend (CH₃)₃SiO_{1/2}-Endgruppen, Copolymere enthaltend (Ph)₂SiO_{2/2}- und (H₂C=CH)(CH₃)SiO_{2/2}-Einheiten, aufweisend (H₂C=CH)(CH₃)₂SiO_{1/2}-Endgruppen,
Copolymere enthaltend (Ph)₂SiO_{2/2}-, (CH₃)₂SiO_{2/2}- und (H₂C=CH)(CH₃)SiO_{2/2}-Einheiten, aufweisend (H₂C=CH)(CH₃)₂SiO_{1/2} Endgruppen,
Copolymere enthaltend (Ph)(CH₃)SiO_{2/2}-, (CH₃)₂SiO_{2/2}- und (H₂C=CH)(CH₃)SiO_{2/2}-Einheiten aufweisend (CH₃)₃SiO_{1/2}-Endgruppen, Copolymere enthaltend (Ph)(CH₃)SiO_{2/2}-, (CH₃)₂SiO_{2/2}- und (H₂C=CH)(CH₃)SiO_{2/2}-Einheiten aufweisend (H₂C=CH)(CH₃)₂SiO_{1/2}-Endgruppen,
Copolymere enthaltend (Ph)(CH₃)SiO_{2/2-} und (H₂C=CH)(CH₃)SiO_{2/2}-Einheiten aufweisend (CH₃)₃SiO_{1/2}-Endgruppen,

Besonders bevorzugte Ausführungsformen der Diorganopolysiloxane (A) der allgemeinen Formel (I) sind
Copolymere enthaltend (H₂C=CH)(CH₃)SiO_{2/2}- und (CH₃) ₂SiO_{2/2} -Einheiten, aufweisend (CH₃)₃SiO_{1/2}-Endgruppen,
Copolymere enthaltend (CH₃)₂SiO_{2/2}-Einheiten, aufweisend (H₂C=CH)(CH₃)₂SiO_{1/2}-Endgruppen,
Copolymere enthaltend (H₂C=CH)(CH₃)SiO_{2/2}- und (CH₃)₂SiO_{2/2}-Einheiten, aufweisend (H₂C=CH)(CH₃)₂SiO_{1/2}-Endgruppen,
Copolymere enthaltend (CH₃)₂SiO_{2/2}-Einheiten, aufweisend (CH₃)₃SiO_{1/2}-Endgruppen,

Aufgrund der nach dem Stand der Technik gängigen Syntheserouten und bei Gegenwart geeigneter Katalysatoren und Reaktionspartnern, kann das Diorganopolysiloxan (A) der allgemeinen Formel (I) einen geringen Gehalt, typischerweise kleiner als 100 Gew.-ppm, Si-gebundener OH-Gruppen aufweisen.

In einer besonders bevorzugten Ausführungsform ist das Diorganopolysiloxan (A) der allgemeinen Formel (I) frei von aromatischen Gruppen.

Die verstärkenden Füllstoffe (B) sind vorhydrophobiert. Die vorhydrophobierten verstärkenden Füllstoffe (B) sind vorzugsweise, jeweils oxidisch vorhydrophobierte pulverförmige Füllstoffe, wie pyrogen hergestellte Kieselsäure, gefällte Kieselsäure und Silicium-Aluminium- Mischoxide oder faserförmige Füllstoffe, wie Asbest, oder Mischungen daraus. Der durch die Hydrophobierung erhaltene Kohlenstoffgehalt der Füllstoffe (B) beträgt vorzugsweise mindestens 0,5 Gew.-% und vorzugsweise höchstens 6 Gew.-%. Bei der Bestimmung des Kohlenstoffgehalts der Füllstoffe wird durch eine Trocknung von mindestens 2 Stunden bei mindestens 200°C sichergestellt, dass der gemessene Kohlenstoffgehalt sich auf die hydrophobierte Schicht der Füllstoffe (B) bezieht.

Besonders bevorzugt als verstärkende Füllstoffe (B) sind pyrogen hergestellte Kieselsäure und gefällte Kieselsäure. Die spezifische Oberfläche dieser aktiv verstärkenden Füllstoffe sollte mindestens 50 m²/g betragen oder vorzugsweise im Bereich von 100 bis 400 m²/g gemäß der Bestimmung nach der BET-Methode liegen. Derartige aktiv verstärkende Füllstoffe sind dem Fachmann auf dem Gebiet der Siliconkautschuke sehr gut bekannte Materialien.

Die Füllstoffe (B) sind durch die Behandlung mit beispielsweise Organosilanen, -silazanen bzw. -siloxanen oder durch Verätherung von Hydroxylgruppen zu Alkoxygruppen hydrophobiert.

Ein bevorzugtes Verfahren zur Hydrophobierung ist in US 5,057,151 beschrieben.

Der Gehalt an vorhydrophobiertem, oxidischem, verstärkenden Füllstoff (B) in der nach dem erfindungsgemäßen Verfahren hergestellten Grundmasse liegt vorzugsweise im Bereich von 0 bis 70 Gew.-%, besonders bevorzugt im Bereich von 0 bis 50 Gew.-%, insbesondere im Bereich von 20 bis 40 Gew.-% .

Die nach dem erfindungsgemäßen Verfahren hergestellten Grundmassen können wahlweise als Bestandteil weitere Zusätze (H) zu einem Anteil von vorzugsweise bis zu 70 Gew.-%, bevorzugt 0,0001 bis 40 Gew.-%, enthalten. Dabei können die Zusätze (H) in der ersten Verfahrensstufe, in der zweiten Verfahrensstufe sowie vor oder nach dem erfindungsgemäßen Verfahren zugesetzt werden. Diese Zusätze können beispielsweise Stabilisatoren, Pigmente oder andere Additive sein, welche die Verarbeitung bzw. die Benetzung des eingesetzten Füllstoffs mit dem Organopolysiloxan erleichtern oder der Einstellung bestimmter Endeigenschaften der nach der Vulkanisation erhaltenen Siliconelastomere dienen. Diese Zusätze können beispielsweise auch inaktive Füllstoffe wie Quarz, Talk, harzartige Polyorganosiloxane, Dispergierhilfsmittel, Lösungsmittel, Haftvermittler, Pigmente, Farbstoffe, Weichmacher, organische Polymere, Hitzestabilisatoren usw. sein. Hierzu zählen Zusätze wie Aktivkohle, Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie beispielsweise Glasfasern, Kunststofffasern, Kunststoffpulver, Farbstoffe, Pigmente usw..

Die nach dem erfindungsgemäßen Verfahren hergestellten Grundmassen werden bevorzugt zur Herstellung von Flüssigsiliconkautschuken verwendet.

Damit eine ausreichend hohe mechanische Festigkeit des vernetzten Siliconkautschuks erzielt werden kann, das aus den erfindungsgemäß hergestellten Grundmassen hergestellt wird, müssen bei dem erfindungsgemäßen Verfahren das Diorganopolysiloxan (A) und der vorhydrophobierte oxidische verstärkende Füllstoff (B) mit einem durch die Hydrophobierung erhaltenen Kohlenstoffgehalt von mindestens 0,5 Gew.-%, homogen miteinander vermischt und geknetet werden.

Überraschenderweise hat sich gezeigt, dass mit Grundmassen aus dem erfindungsgemäßen Verfahren durch den beschriebenen zweistufigen Prozess, das in der ersten Verfahrensstufe dem bisher bekannten Verfahren nach EP 0 807 509 A1, und in der zweiten Stufe einer kontinuierlichen Nachbehandlung der aus der ersten Verfahrensstufe erhaltenen Masse über die beschriebene Rührvorrichtung (8) entspricht, Siliconzusammensetzungen hergestellt werden können, die gegenüber Siliconzusammensetzungen, die ausschließlich nach dem in EP 0 807 509 A1 beschriebenen Verfahren hergestellt werden, folgende Vorteile aufweisen:
- verbesserte Stabilität gegenüber Viskositätsanstieg bei Lagerung, insbesondere bei erhöhten Temperaturen,
- verbesserte Stabilität gegenüber Reaktivitätsverlust, also eine geringe Änderung des Vernetzungsverhaltens bei Lagerung,
- verbesserte Stabilität gegenüber unerwünschten Reaktionen mit Additiven, wie beispielsweise Haftvermittlern oder
Stabilisatoren.

Zudem weisen die Siliconelastomere, die durch Vernetzung aus Siliconzusammensetzungen hergestellt werden, die erfindungsgemäß hergestellte Grundmassen enthalten, eine leichte Entformbarkeit aus insbesondere metallischen Vulkanisationsformen unmittelbar nach Vulkanisation und ein hohes Niveau der Gebrauchseigenschaften wie Transparenz, und mechanisches Eigenschaftsprofil wie insbesondere Weiterreißwiderstand, Reißfestigkeit, Reißdehung und Druckverformungsrest auf.

Ein weiterer Vorteil des erfindungsgemäßen Verfahrens liegt darin, dass Volumenströme von mehr als 300 kg/h möglich sind. Dies bringt erhebliche wirtschaftliche Vorteile gegenüber dem Stand der Technik.

In einer bevorzugten Ausführungsform ist das Verfahren in der ersten Verfahrensstufe zusätzlich mit wenigstens einer Entgasungsvorrichtung wie beispielsweise einem Entgasungsdom ausgestattet, bei der ein Vakuum angelegt wird. In einer besonders bevorzugten Ausführungsform wird das Vakuum in der steifen Phase angelegt.

In der zweiten Verfahrensstufe des erfindungsgemäßen Verfahrens wird die gemäß erster Verfahrensstufe hergestellte Masse einer Nachbehandlung in einer Rührvorrichtung (8) unterworfen, die über eine Beschickungsöffnung (9) verfügt, über welche die über die erste Verfahrensstufe hergestellte Masse mit einem definierten Volumenstrom X der Rührvorrichtung (8) zugeführt, unter fortwährender Erneuerung der Oberfläche (14) unter Einsatz von rotierenden Misch-/Knetwerkzeugen (10) mit Scherkraft beaufschlagt und entgast, und über eine Austragsöffnung (11) mit dem Volumenstrom Y aus der zweiten Verfahrensstufe ausgeschleust wird, wobei die so erhaltene Grundmasse eine Viskosität von 500.000 bis 12.000.000 mPa*s bei einer Temperatur von 25°C und einer Scherrate von 1 s⁻¹ aufweist.

In einer bevorzugten Ausführungsform des erfindungsgemäßen Verfahrens ist in der zweiten Verfahrensstufe die mittlere Verweilzeit der Grundmasse länger als in der ersten Verfahrensstufe.

Die Verweilzeit für die in der zweiten Verfahrensstufe hergestellte Grundmasse ist definiert als der Quotient des durch die Grundmasse eingenommenen Anlagevolumens zum austretenden Volumenstrom Y. Die Verweilzeit liegt dabei in einem Bereich zwischen 0,1 bis 15 h, bevorzugt zwischen 0,5 bis 10 h und besonders bevorzugt zwischen 1 bis 10 h.

Die in der zweiten Verfahrensstufe verwendeten Misch-Knetwerkzeuge (10) können sowohl reine Mischelemente als auch Scherelemente sein. In einer besonders bevorzugten Ausführungsform enthält die Rührvorrichtung (8) als Misch-/Knetwerkzeuge (10) sowohl Mischelemente als auch Scherelemente. Je nach Auslegung der Anlage, d. h. in Abhängigkeit von dem im kontinuierlichen Betrieb eingestellten Volumen, das die Grundmasse in der Rührvorrichtung (8) der zweiten Verfahrensstufe einnimmt, und den Volumenströmen X und Y, können mit der kontinuierlich arbeitenden Rührvorrichtung (8) unterschiedliche Verweilzeiten eingestellt werden.

In einer bevorzugten Ausführungsform wird die Rührvorrichtung (8) der zweiten Verfahrensstufe so betrieben, dass die Grundmasse an einen ausreichend großen Gasraum (13) innerhalb der Rührvorrichtung angrenzt. In einer besonders bevorzugten Ausführungsform wird die Rührvorrichtung (8) der zweiten Verfahrensstufe so betrieben, dass - bezogen auf das Gesamtvolumen der Rührvorrichtung (8) 20 bis 90% Grundmasse enthalten sind, insbesondere 30 bis 80%.

In einer bevorzugten Ausführungsform des erfindungsgemäßen Verfahrens werden in der zweiten Verfahrensstufe die gemäß erster Verfahrensstufe hergestellten Massen einem Rührvorgang mit geringerem Scherkrafteintrag als in der ersten Verfahrensstufe unterworfen.

In einer weiteren bevorzugten Ausführungsform des erfindungsgemäßen Verfahrens werden in der zweiten Verfahrensstufe die gemäß erster Verfahrensstufe hergestellten Massen einer Vakuumbehandlung bei erhöhter Temperatur unterworfen. Dabei liegt die Temperatur in einem Bereich zwischen 80 und 250°C, bevorzugt zwischen 120 und 250°C und besonders bevorzugt zwischen 140 und 230°C. Der Druck liegt dabei in einem Bereich zwischen 1 und 900 mbar, bevorzugt zwischen 1 und 300 mbar und besonders bevorzugt zwischen 1 und 100 mbar.

In einer weiteren bevorzugten Ausführungsform des erfindungsgemäßen Verfahrens ist in der zweiten Verfahrensstufe das Oberflächen-Volumenverhältnis größer als das der ersten Verfahrensstufe.

Unter dem Oberflächen-Volumenverhältnis wird in der vorliegenden Erfindung das Verhältnis der Oberfläche (14) der Grundmasse, die an ein Vakuum (13) oder einen Gasraum (13) angrenzt, zum Volumen (15), das die Grundmasse in der Rührvorrichtung (8) einnimmt, verstanden. Das Oberflächen-Volumenverhältnis sollte dabei in einem Bereich zwischen 0,1 bis 10, bevorzugt zwischen 0,25 bis 10 und besonders bevorzugt zwischen 0,5 bis 8 liegen.

In einer weiteren bevorzugten Ausführungsform des erfindungsgemäßen Verfahrens werden in der zweiten Verfahrensstufe Misch/Knetwerkzeuge (10) eingesetzt, die ausgewählt sind aus der Gruppe, enthaltend: Planeten- oder Doppelplanetenrührwerkzeug, Kreuzbalkenmischwerkzeug, Wendelrührwerkzeug, Dissolverscheibenwerkzeug, Propellerrührwerkzeug, Abstreifer. Dabei können auch Kombinationen der beschriebenen Werkzeuge (10) eingesetzt werden. Besonders bevorzugt werden in der zweiten Verfahrensstufe Misch-/Knetwerkzeuge (10) eingesetzt, die ausgewählt sind aus der Gruppe, die besteht aus: Planeten- oder Doppelplanetenrührwerkzeug, Kreuzbalkenmischwerkzeug, Dissolverscheibenwerkzeug, Abstreifer, oder Kombinationen daraus.

In einer weiteren bevorzugten Ausführungsform des erfindungsgemäßen Verfahrens werden in der zweite Verfahrensstufe mehrere Misch-/Knetwerkzeuge (10) eingesetzt, die über unabhängig voneinander arbeitende Antriebsvorrichtungen (12) angetrieben werden. Dabei können die Misch-/Knetwerkzeuge (10) gleich- oder gegensinnig angetrieben werden.

In einer bevorzugten Ausführungsform ist die zweite Verfahrensstufe mit einer Heizvorrichtung ausgestattet, mit der die Masse auf eine Temperatur von bis zu 250°C erhöht werden kann. Dies kann beispielsweise über wenigstens einen Heizmantel realisiert werden, der/die an der Außenwand der Rührvorrichtung montiert ist. Eine andere Möglichkeit besteht darin, dass wenigstens ein Heizstab im Innenraum der Rührvorrichtung fest montiert ist, über den ein entsprechender Wärmeeintrag in die Grundmasse erfolgen kann.

In einer Ausführungsform des erfindungsgemäßen Verfahrens wird in der Rührvorrichtung (8) der zweiten Verfahrensstufe der Volumenstrom X im Verhältnis zum Volumenstrom Y in einen Bereich von 0,5 bis 1,5 eingestellt.

In einer weiteren bevorzugten Ausführungsform der Erfindung erfolgt die Entgasung der Masse in der Rührvorrichtung (8) der zweiten Verfahrensstufe mittels eines kontinuierlichen oder diskontinuierlichen Gasstroms (16) im Vakuum (13), wobei das in die Rührvorrichtung eingeleitete sog. Schleppgas zur besseren Entfernung flüchtiger Bestandteile dient. In einer besonders bevorzugten Ausführungsform werden inerte Gase als Schleppgas eingesetzt, insbesondere Stickstoff.

In einer bevorzugten Ausführungsform ist die erste Verfahrensstufe mit der zweiten Verfahrensstufe direkt verbunden. Dies erfolgt bevorzugt auf eine Weise, dass die in der ersten Verfahrensstufe hergestellte Grundmasse über ein Rohrsystem, gegebenenfalls mit Hilfe einer Fördervorrichtung (17), wie beispielsweise einer Pumpe, mit der zweiten Verfahrensstufe direkt verbunden ist. Dies gewährleistet eine vollkontinuierliche Grundmassenherstellung mit dem erfindungsgemäßen Verfahren.

Die erfindungsgemäß eingesetzte zweite Verfahrensstufe wird im kontinuierlichen Betrieb so gesteuert, dass immer eine ausreichende Menge Masse in der Rührvorrichtung enthalten ist. Dies wird vorwiegend über die Einstellung der Volumenströme X und Y realisiert. Zusätzlich kann über die Steuerung der Drehzahl und der Drehrichtung der Misch/Knetwerkzeuge (10) der Scherkrafteintrag sowie die Mischintensität gezielt eingestellt werden. In einer bevorzugten Ausführungsform liegen die Drehzahlen der Misch-/Knetwerkzeuge (10), mit Ausnahme eines Dissolverscheibenwerkzeugs, in einem Bereich von 0,1 bis 150 s⁻¹, besonders bevorzugt in einem Bereich von 1 bis 100 s⁻¹. In einer weiteren bevorzugten Ausführungsform liegt/liegen die Drehzahl(en) des/der Dissolverscheibenwerkzeugs/ Dissolverscheibenwerkzeuge in einem Bereich von 50 bis 1000 s⁻¹, besonders bevorzugt in einem Bereich von 200 bis 600 s⁻¹.

In einer bevorzugten Ausführungsform der zweiten Verfahrensstufe werden die Misch-/knetwerkzeuge (10) so ausgelegt, dass die Grundmasse zur Austragsöffnung (11) befördert wird. Sie können auch mit Hilfe einer Fördervorrichtung (17), wie beispielsweise einer Pumpehilfe zur Austragsöffnung befördert werden.

Vorzugsweise sind in der Rührvorrichtung (8) der zweiten Verfahrensstufe neben der Beschickungsöffnung (9) für die Grundmasse aus der ersten Verfahrensstufe weitere Beschickungsöffnungen (18) vorhanden, die eine kontinuierliche Zuführung von beispielsweise Verarbeitungshilfsmitteln, weiteren Organopolysiloxanen oder Additiven erlauben.

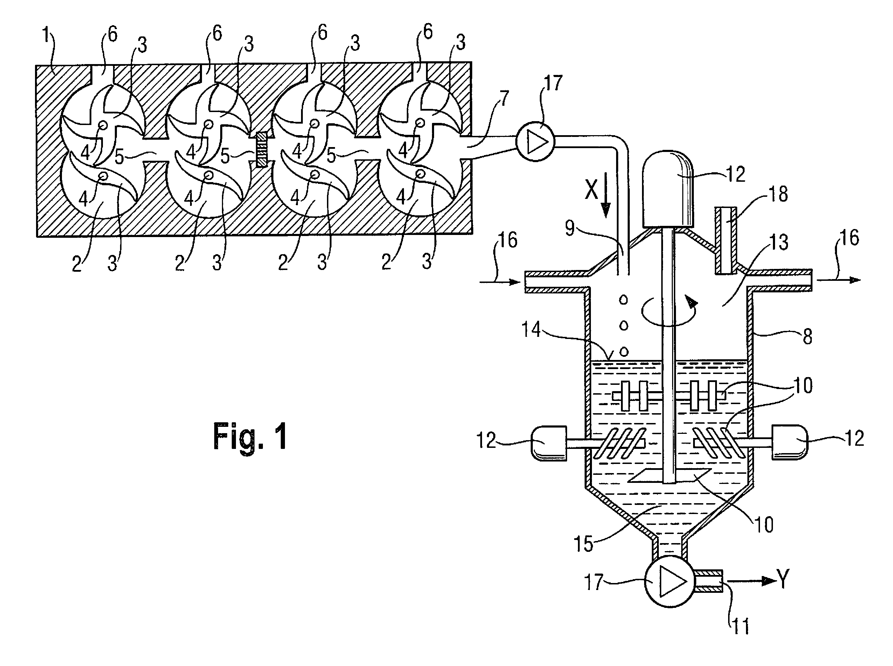

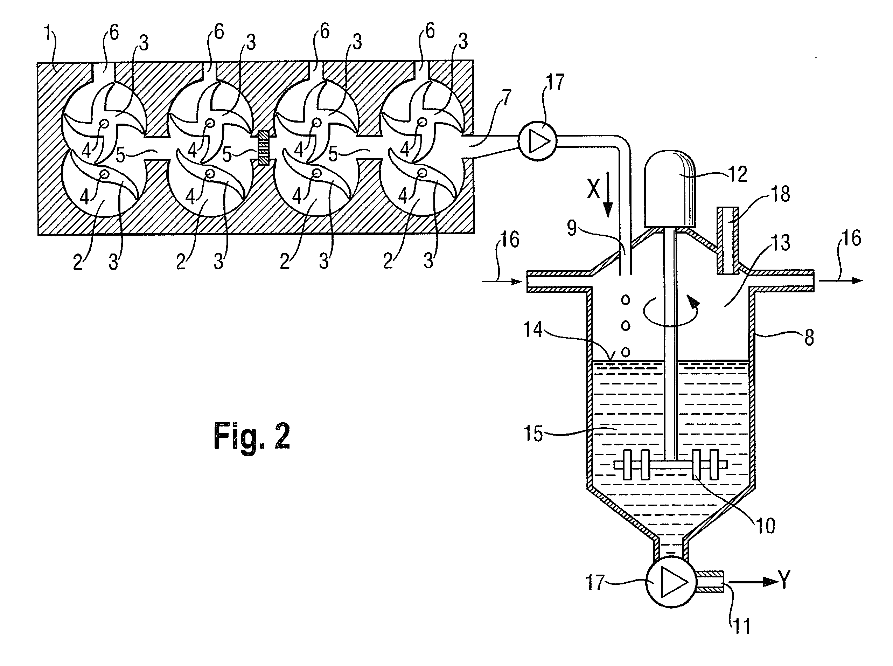

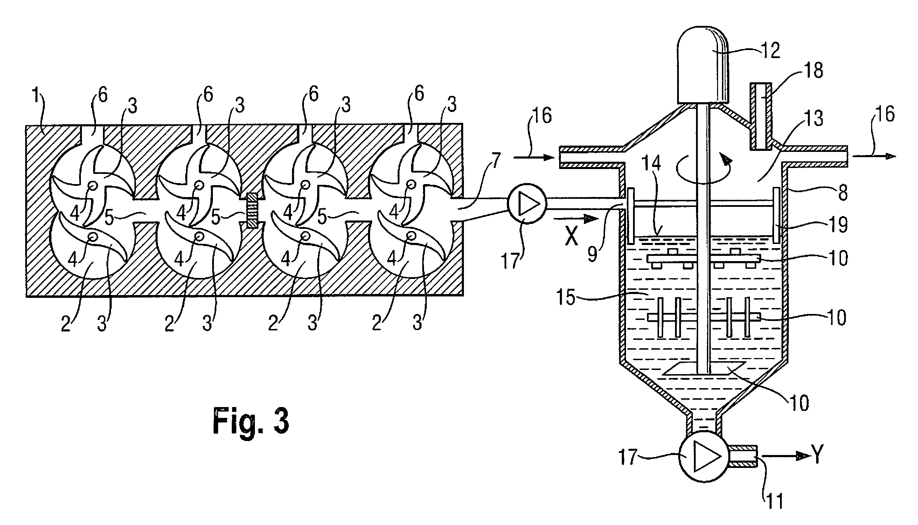

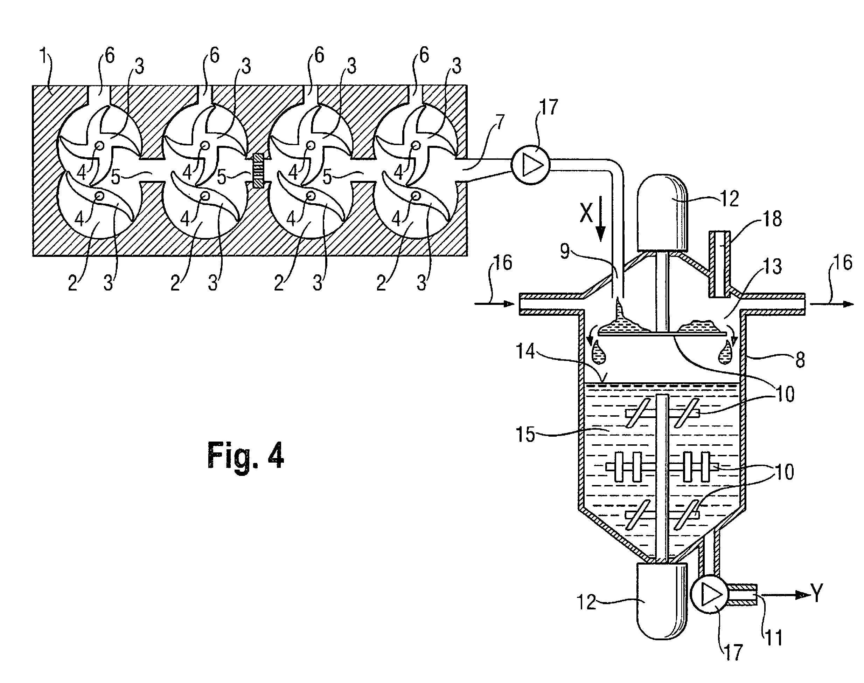

Mögliche Ausführungsformen der ersten und zweiten Verfahrensstufe sind in den Figuren 1 bis 4 als Schnittzeichnungen dargestellt. In den Abbildungen sind gleiche Elemente durch die gleichen Zahlen gekennzeichnet. Die Knetkaskade (1) hat in allen Figuren 1 bis 4 vier in Reihe nebeneinander angeordnete Knetkammern (2). Diese Figuren stellen nur einige mögliche Ausführungsformen der Apparatur dar, die für das erfindungsgemäße Verfahren verwendet werden können ohne das Verfahren jedoch auf diese Apparaturen zu beschränken.

Vorzugsweise weist die Knetkaskade der (1) der ersten Verfahrensstufe mindestens drei, insbesondere mindestens fünf Knetkammern (2) auf. Die Beschichtungsöffnungen (6) können direkt in Knetkammern (2) führen oder zwischen zwei Knetkammern (2) angeordnet sind.

In einer bevorzugten Ausführungsform der Knetkaskade (1) der ersten Verfahrensstufe weist die letzte Knetkammer Pumpflügel für eine Verbesserung des Produktaustrags auf. Die Zudosierung und Einmischung der Einsatzstoffe wie der Organopolysiloxane (A), der Füllstoffe (B), und gegebenenfalls von weiteren Zusätzen in die Grundmasse kann in beliebiger Reihenfolge geschehen; auch kann die Zudosierung z. B. der Füllstoffe (B) in eine oder mehrere Knetkammern (2) der Knetkaskade (1) erfolgen. Die Dosierung der Organopolysiloxane (A) kann sowohl in der ersten Knetkammer (2) als auch - zumindest in Teilen - in einer oder mehreren nachgeschalteten Knetkammern (2) erfolgen, um beispielsweise die Viskosität der Masse zu verringern. In alle Knetkammern (2) können die erforderlichen Füllstoffe (B) dosiert werden, vorzugsweise wird in die letzte Kammer (2) kein Füllstoff (B) dosiert. Dabei ist es möglich die gesamte erforderliche Füllstoffmenge nur in beispielsweise einer/zwei/drei oder vier der ersten Kammern (2) zuzugeben, eine Füllstoffverteilung anteilig über alle ist allerdings ebenfalls möglich.

Die in den Figuren 1 bis 4 als mögliche Ausführungsformen skizzierten Rührvorrichtungen (8) der zweiten Verfahrensstufe bestehen aus einem vorzugsweise metallischen Behältnis, das eine Beschickungsöffnung (9) aufweist, über die die Masse aus der ersten Verfahrensstufe mit einem Volumenstrom X zugeführt wird. Die Misch-/Knetwerkzeuge (10) können optional auch durch Abstreifer (19) ergänzt werden. Sie werden mit Hilfe einer Antriebsvorrichtung (12), wie beispielsweise eines Elektromotors oder über ein Hydraulikaggregat in Rotation gebracht und können beispielsweise über einen Drehmomentregler unabhängig voneinander gesteuert werden. Die Rührvorrichtung (8) verfügt über einen Gaseinlass und -auslass (16), wobei über den Gaseinlass vorzugsweise ein Schleppgas eingeführt und an dem Gasauslass vorzugsweise ein Vakuum angelegt wird. Über die Austragsöffnung (11) der zweiten Verfahrensstufe erfolgt das Ausschleusen der Grundmasse.

### Beispiele

Die nachfolgenden Beispiele erläutern die Erfindung, ohne dabei beschränkend zu wirken.

In den angegebenen Beispielen sind - falls nicht anders angegeben - alle Mengen- und Prozentangaben auf das Gewicht bezogen und alle Drücke 0,10 MPa (abs.). Die angegebenen Viskositäten wurden bei einer Temperatur von 20 °C bestimmt.

Bei allen Beispielen wurde eine Grundmasse (GM) mit den folgenden Bestandteilen hergestellt:

### Organopolysiloxan (A)

Vinyldimethylsiloxy-terminiertes Polydimethylsiloxan mit einer bei 25°C gemessenen Viskosität von ca. 20.000 mPa*s.

### Vorhydrophobierter oxidischer verstärkender Füllstoff (B)

Wacker® HDK SKS 300, pyrogene Kieselsäure mit einer nach BET gemessenen spezifischen Oberfläche von 300 m²/g und einem Kohlenstoffgehalt von 3,9-4,2 Gew.-%.

### Haftvermittler

3-Glycidoxypropyltrimethoxysilan mit dem Handelsnamen GENIOSIL^{®} GF 80 (CAS 2530-83-8) von der Wacker Chemie AG.

### Beispiel 1 (nicht-erfindungsgemäß):

Kontinuierliche Herstellung einer Grundmasse 1 für additionsvernetzende Flüssigsiliconkautschuke

An einer Conterna^{®} Knetmaschine von IKA-Maschinenbau Janke & Kunkel GmbH & Co.KG, Staufen, bestehend aus 12 Kammern mit einem Volumen von jeweils 10 Litern, werden in die erste Kammer 150 kg/h Polydimethylsiloxan mit Vinyl-Endgruppen mit einer Viskosität von 20.000 mPa*s sowie 95 kg/h Wacker^{®} HDK SKS 300 dosiert. Die ab Kammer 2 kompaktierte Masse wird bei Drehzahlen von 50 bis 70 UpM in den Kammern 2 bis 8 unter Kühlung geknetet. Die Temperatur erhöht sich dabei auf ca. 95°C. In Kammer 9, 10 und 11 wird jeweils Polydimethylsiloxan mit Vinylendgruppen mit einer Viskosität von 20.000 mPa*s dosiert. Die Durchsätze betragen dabei:
Kammer 9: 15 kg/h,
Kammer 10: 16 kg/h,
Kammer 11: 17 kg/h.
Die Drehzahlen der Knetwerkzeuge in den Kammern 9-11 betragen ca. 200 UpM. Die Kammer 12 ist mit Pumpflügeln bestückt, die das Produkt in ein Entgasungsgefäß fördern. Die Verweilzeit der Grundmasse in der Knetmaschine beträgt ca. 28 min. Das Entgasungsgefäß wird mit ca. 5m³/h N₂ bei einem Unterdruck von ca. 200 mbar gespült, um geringe Mengen an flüchtigen Siloxanen in ein Abgasreinigungssystem zu schleppen. Die Grundmasse wird aus dem Entgasungsbehälter mittels Pumpe über eine Strainereinheit in einen Vorratsbehälter ausgetragen. Es werden 258 kg/h Grundmasse 1 produziert.

Die Grundmasse 1 ist transparent und weist keine Inhomogenitäten oder Knörzel auf.

### Beispiel 2 (nicht-erfindungsgemäß):

Kontinuierliche Herstellung einer Grundmasse 2 für additionsvernetzende Flüssigsiliconkautschuke

An einer Conterna^{®} Knetmaschine von IKA-Maschinenbau Janke & Kunkel GmbH & Co.KG, Staufen, bestehend aus 12 Kammern mit einem Volumen von jeweils 10 Litern, werden in die erste Kammer 180 kg/h Polydimethylsiloxan mit Vinyl-Endgruppen mit einer Viskosität von 20.000 mPa*s sowie 130 kg/h Wacker^{®} HDK SKS 300 dosiert. Die ab Kammer 2 kompaktierte Masse wird bei Drehzahlen von 50 bis 70 UpM in den Kammern 2 bis 8 unter Kühlung geknetet. Die Temperatur erhöht sich dabei auf ca. 90°C. In Kammer 9, 10 und 11 wird jeweils Polydimethylsiloxan mit Vinylendgruppen mit einer Viskosität von 20.000 mPa*s dosiert. Die Durchsätze betragen dabei:
Kammer 9: 20 kg/h,
Kammer 10: 22 kg/h,
Kammer 11: 24 kg/h.
Die Drehzahlen der Knetwerkzeuge in den Kammern 9-11 betragen ca. 200 UpM. Die Kammer 12 ist mit Pumpflügeln bestückt, die das Produkt in ein Entgasungsgefäß fördern. Das Entgasungsgefäß wird mit ca. 5m³/h N₂ bei einem Unterdruck von ca. 200 mbar gespült, um geringe Mengen an flüchtigen Siloxanen in ein Abgasreinigungssystem zu schleppen. Die Grundmasse wird aus dem Entgasungsbehälter mittels Pumpe über eine Strainereinheit in einen Vorratsbehälter ausgetragen.
Es werden 376 kg/h Grundmasse 2 produziert.

Die Grundmasse 2 ist transparent, weist jedoch bereits geringe Inhomogenitäten (Schleier), jedoch keine Knörzel auf.

### Beispiel 3 (erfindungsgemäß) :

Kontinuierliche Herstellung der Grundmasse 3 für additionsvernetzende Flüssigsiliconkautschuke

An einer Conterna^{®} Knetmaschine von IKA-Maschinenbau Janke & Kunkel GmbH & Co.KG, Staufen, bestehend aus 12 Kammern mit einem Volumen von jeweils 10 Litern, werden in die erste Kammer 180 kg/h Polydimethylsiloxan mit Vinyl-Endgruppen mit einer Viskosität von 20.000 mPa*s sowie 130 kg/h Wacker^{®} HDK SKS 300 dosiert. Die ab Kammer 2 kompaktierte Masse wird bei Drehzahlen von 50 bis 70 UpM in den Kammern 2 bis 8 unter Kühlung geknetet. Die Temperatur erhöht sich dabei auf ca. 90°C. In Kammer 9, 10 und 11 wird jeweils Polydimethylsiloxan mit Vinylendgruppen mit einer Viskosität von 20.000 mPa*s dosiert. Die Durchsätze betragen dabei:
Kammer 9: 20 kg/h,
Kammer 10: 22 kg/h,
Kammer 11: 24 kg/h.
Die Drehzahlen der Knetwerkzeuge in den Kammern 9-11 betragen ca. 200 UpM. Die Kammer 12 ist mit Pumpflügeln bestückt, die über ein Rohrsystem in die nachgeschaltete Rührvorrichtung fördern.

Die Rührvorrichtung entspricht der zweiten Verfahrensstufe des erfindungsgemäßen Verfahrens und ist in Analogie zu der schematischen Darstellung der Rührvorrichtung (8) gemäß Figur 1 aufgebaut. Dabei ist die Rührvorrichtung (8) während des kontinuierlichen Betriebs zu ca. 60% mit Grundmasse gefüllt. Das Volumen der Rührvorrichtung (8) beträgt 1,00 m³. Die Verweilzeit der Masse in der Knetmaschine beträgt ca. 19 min. Die Verweilzeit der Masse in der Rührvorrichtung (8) beträgt ca. 96 min. Die Rührvorrichtung (8) ist mit mehreren Kreuzbalkenmischwerkzeugen (10) und mehreren Abstreifern (19) ausgestattet. Die Abstreifer (19) dienen dazu, die an der Innenwand der Rührvorrichtung (8) anhaftende Masse abzustreifen. Die Drehzahlen der Werkzeuge betragen 10 U/min. Die Masse wird mit einem Heizmantel, der an der Außenwand der Rührvorrichtung (8) montiert ist, auf eine Temperatur von ca. 150°C aufgeheizt. Zur Entfernung von geringen Mengen an flüchtigen Siloxanen wird die Rührvorrichtung (8) mit ca. 1 m³/h N₂ bei einem Unterdruck von ca. 70 mbar gespült. Die Grundmasse wird anschließend aus der Rührvorrichtung (8) mittels Pumpe (17) über eine Strainereinheit in einen Vorratsbehälter ausgetragen.

Es werden 376 kg/h Grundmasse 3 produziert.

Die Grundmasse 3 ist transparent und weist keine Inhomogenitäten oder Knörzel auf.

Die Viskosität der gemäß Beispiel 1-3 hergestellten Grundmassen liegt unmittelbar nach der Herstellung im Bereich von 1.000 bis 1.500 Pa*s.

### Stabilitätsprüfung:

Für eine Überprüfung der Stabilität der aus den erfindungsgemäßen und nicht-erfindungsgemäßen Grundmassen hergestellten Flüssigsiliconkautschuke wurden in Anlehnung an den Stand der Technik in der folgenden Weise zwei Komponenten A und B hergestellt:

### Herstellung der A-Komponente:

345,8 g Grundmasse wurden mit 3,5 g eines dimethylvinylsiloxyendgestopperten Polydimethylsiloxans mit Methylvinylsiloxygruppen mit einem Vinylgehalt von 2,5 mmol/g und einer Viskosität von 350 mm²/s und 0,7 g einer Katalysatorlösung mit einem Pt-Gehalt von 1 Gew.-%, welche einen Platin-Divinyltetramethyldisiloxan-Komplex in Siliconpolymer enthält, vermischt.

### Herstellung der B-Komponente:

90 g Grundmasse wurden mit 0,1 g 1-Ethinyl-1-cyclohexanol, 5,5 g eines vinyldimethylsiloxy-terminierten Polydimethylsiloxans mit einer Viskosität von 20.000 mPa*s, 3,3 g eines Mischpolymerisats aus Dimethylsiloxy- und Methylhydrogensiloxy-Einheiten im Molverhältnis 2:1, das Trimethylsiloxyendgestoppert ist mit einer Viskosität von 100 mPa*s und einem Si-H-Gehalt von 0,5% vermischt.

Zur Überprüfung der Stabilität hinsichtlich eines Viskositätsanstiegs nach Lagerung wurde über einen Zeitraum von 28 Tagen die Viskosität der B-Komponenten bei erhöhter Temperatur verfolgt. Dies ist eine dem Fachmann bekannte Vorgehensweise zur Bewertung der Lagerstabilität von Flüssigsiliconkautschuken.

In Tabelle 1 ist die Viskosität [mPa*s] - gemessen am Rheometer bei einer Scherrate von D = 0,89⁻¹ - der B-Komponenten der Flüssigsiliconkautschuke, die Grundmassen aus den Beispielen 1 bis 3 enthalten, angegeben. Es wurde die Viskosität sowohl sofort nach der Herstellung der Mischung (Anfangsviskosität) als auch nach zwei Wochen und vier Wochen Lagerung der jeweiligen Komponente bei einer Temperatur von 50°C gemessen.

**Tabelle 1:**

| Viskosität in [mpa*s] | LSR aus Grundmasse 1 | LSR aus Grundmasse 2 | LSR aus Grundmasse 3* |
|---|---|---|---|
| Anfang | 915.000 | 934.000 | 922.000 |
| nach 2 Wochen | 1.070.000 | 1.690.000 | 980.000 |
| nach 4 Wochen | 1.281.000 | 2.212.000 | 1.107.000 |
| * erfindungsgemäß | | | |

Der grundsätzlich unerwünschte Viskositätsanstieg bei Lagerung fällt für die B-Komponente des Flüssigsiliconkautschuks, der die Grundmasse 3 aus Beispiel 3 enthält, die nach dem erfindungsgemäßen Verfahren hergestellt wurde, trotz des deutlich höheren Durchsatzes im Vergleich zu der B-Komponente, welche die Grundmasse 1 aus Beispiel enthält, am geringsten aus. Daraus lässt sich einfach ableiten, dass die nach dem erfindungsgemäßen Verfahren hergestellten Grundmassen in Flüssigsiliconkautschukformulierungen eine deutliche besserte Lagerstabilität aufweisen. Demgegenüber weist die B-Komponente des Flüssigsiliconkautschuks, der die Grundmasse 2 aus Beispiel 2 enthält, die mit dem gleichen Durchsatz wie die Grundmasse 3 aus Beispiel 3 hergestellt wurde, einen sehr starken Viskositätsanstieg auf. Dies führt bereits nach relativ kurzer Lagerzeit zu erheblichen Problemen beim Spritzgießprozess. Das Ergebnis zeigt eindrucksvoll, dass die nach dem erfindungsgemäßen Verfahren hergestellte Grundmasse mit Durchsätzen deutlich oberhalb von 300 kg/h hergestellt werden kann, ohne dass mit Problemen beim Spritzgießen eines Flüssigsiliconkautschuks auf Basis der erfindungsgemäß hergestellten Grundmasse zu rechnen ist.

Für die Messung der mechanischen Eigenschaften wurden die Komponenten A und B der additionsvernetzenden Flüssigsiliconkautschukformulierungen (LSR) im Verhältnis 1:1 unter Einsatz eines Flügelrührers homogen miteinander vermischt und anschließend in einer Heizpresse bei einer Temperatur von 165°C über einen Zeitraum von 5 Minuten in den elastischen Zustand überführt (vulkanisiert).

Die in der Tabelle 2 angegebenen Werte der mechanischen Vulkanisateigenschaften von additionsvernetzenden Flüssigsiliconelastomeren, die aus der erfindungsgemäßen Grundmasse 3 und der nicht-erfindungemäßen Grundmasse 1 hergestellt wurden, zeichnen sich beide durch ein sehr ausgewogenes mechanisches Eigenschaftsprofil aus.

**Tabelle 2:**

| Grundmasse in LSR | Härte (Shore A) | Reißdehnung | Reißfestigkeit | Weiterreißwiderstand | Druckverformungsrest** |
|---|---|---|---|---|---|
| | | [%] | [N/mm²] | [N/mm] | [%] |
| 1 | 41 | 580 | 9,5 | 30 | 13 |
| 3* | 38 | 600 | 9,8 | 28 | 10 |
| * erfindungsgemäß | | | | | |
| ** gemessen über 22h bei 175°C in Anlehnung an ISO 815 | | | | | |

Die Überprüfung der Stabilität gegenüber SiH-Abbau erfolgte in der Weise, dass bei der oben angegebenen Lagerung der unterschiedlichen B-Komponenten der SiH-Gehalt mittels ¹H-NMR über den angegebenen Zeitraum beurteilt wurde, das heißt Messungen in definierten Zeitintervallen durchgeführt wurden.

Es konnte festgestellt werden, dass der SiH-Gehalt der B-Komponente, die aus der erfindungsgemäßen Grundmasse 3 hergestellt wird, den geringsten SiH-Abbau aufweist.

Die Überprüfung der Stabilität gegenüber Additivabbau erfolgte am Beispiel einer selbsthaftenden Flüssigsiliconkautschukformulierung, die einen Haftvermittlersystem in der B-Komponente enthält.

### Herstellung der B-Komponente eines selbsthaftenden Flüssigsiliconkautschuks:

90 g Grundmasse mit 0,1 g 1-Ethinyl-1-cyclohexanol, 5 g eines vinyldimethylsiloxy-terminierten Polydimethylsiloxans mit einer Viskosität von 20.000 mPa*s (25°C), 2,4 g eines Mischpolymerisats aus Methylhydrogensiloxy- und Dimethylsiloxy-Einheiten im Molverhältnis 1:2 und Trimethylsiloxy-Endgruppen und einer Viskosität von 100 mPa*s sowie einem Si-H-Gehalt von 0,5%, 1,2 g Pentamethylcyclopentasiloxan, 1,5 g 3-Glycidoxypropyltrimethoxysilan vermischt.

Es wurden B-Komponenten mit den Grundmassen 1 bis 3 hergestellt und der Viskositätsanstieg nach Lagerung bei einer Temperatur von 25°C über einen Zeitraum von 3 Monaten verfolgt. Zusätzlich wurde über einen Zeitraum von 3 Monaten der Haftvermittlergehalt über Infrarotspektroskopie quantifiziert.

Mit Ausnahme jener B-Komponente, welche die erfindungsgemäße Grundmasse 3 enthält, konnte nach 3 Monaten eine Erhöhung der Viskosität der B-Komponenten von über 3.000.000 mPa*s festgestellt werden. Dies würde bei der Verarbeitung im Spritzguss bereits zu nicht unerheblichen Dosierschwierigkeiten respektive Verarbeitungsproblemen führen.

Bei der Messung des Haftvermittlergehalts der B-Komponenten über IR-Spektroskopie zeigte sich, dass jene B-Komponenten, welche die Grundmassen 1 und 2 enthalten, ein deutlicher Abbau des Haftvermittlers festgestellt werden kann. Demgegenüber konnte bei der B-Komponente, welche die erfindungsgemäße Grundmasse 3 enthält nur ein geringer Haftvermittlerabbau festgestellt werden.

## Patentansprüche

1. Verfahren zur Herstellung von Grundmassen mit einer Viskosität von 500.000 bis 12.000.000 mPa*s, gemessen bei 25°C und einer Scherrate von 1 s⁻¹, **dadurch gekennzeichnet, dass**
- mindestens ein Diorganopolysiloxan (A) der allgemeinen Formel (I)
R¹aR²bSiO_{(4-a-b)/2} (I),
wobei,
**R¹** Hydroxylrest oder einen monovalenten, gegebenenfalls halogensubstituierten, gegebenenfalls O-, N-, S-, oder P- Atome enthaltenden Kohlenwasserstoffrest mit 1 bis 20 Kohlenstoffatomen, der frei von aliphatisch ungesättigten Gruppen ist,
**R²** einen monovalenten, aliphatisch ungesättigten, gegebenenfalls halogensubstituierten, gegebenenfalls O-, N- S-, oder P-Atome enthaltenden Kohlenwasserstoffrest mit 2 bis 10 Kohlenstoffatomen,
**b** Werte von 0,0001 bis 2,
bedeuten,
mit der Maßgabe, dass 1,5<(**a+b**)≤3,0 und dass pro Molekül durchschnittlich mindestens zwei aliphatisch ungesättigte Reste **R²** enthalten sind und dass die bei 25°C bestimmte Viskosität der Diorganopolysiloxane (A) 1 bis 40.000.000 mPa*s beträgt,
mit
- mindesstens einem vorhydrophobierten oxidisch verstärkenden Füllstoff (B) mit einem durch die Hydrophobierung erhaltenen Kohlenstoffgehalt von mindestens 0,5 Gew.-%,
in einer ersten Verfahrensstufe in einer Knetkaskade (1) mit wenigstens zwei in Reihe nebeneinander angeordneten Knetkammern (2), die jeweils zwei achsparallele, gleich- oder gegensinnig angetriebene Knetwerkzeuge (3) enthalten und die durch quer zu den Achsen (4) der Knetwerkzeuge (3) passierbare Öffnungen (5) miteinander verbunden sind, wobei mindestens die erste Knetkammer eine Beschickungsöffnung (6) und die letzte Knetkammer eine Austragsöffnung (7) aufweisen, homogen miteinander vermischt und geknetet werden,
und die so erhaltene Masse,
in einer zweiten nachgeschalteten Verfahrensstufe einer Nachbehandlung in einer Rührvorrichtung (8) unterworfen wird, die über eine Beschickungsöffnung (9) verfügt, über welche die über die erste Verfahrensstufe hergestellte Masse mit einem definierten Volumenstrom X der Rührvorrichtung (8) zugeführt, unter fortwährender Erneuerung der Oberfläche (14) unter Einsatz von rotierenden Misch-/Knetwerkzeugen (10) sowie optional Abstreifern (19) mit Scherkraft beaufschlagt und entgast, und über eine Austragsöffnung (11) mit dem Volumenstrom Y aus der zweiten Verfahrensstufe ausgeschleust wird.

2. Verfahren gemäß Anspruch 1, **dadurch gekennzeichnet, dass** in der zweiten Verfahrensstufe die mittlere Verweilzeit der Grundmasse länger als in der ersten Verfahrensstufe ist.

3. Verfahren gemäß einem der Ansprüche 1 bis 2, **dadurch gekennzeichnet, dass** in der zweiten Verfahrensstufe die gemäß erster Verfahrensstufe hergestellten Massen einem Rührvorgang mit geringerem Scherkrafteintrag als in der ersten Verfahrensstufe unterworfen sind.

4. Verfahren gemäß einem der Ansprüche 1 bis 3, **dadurch gekennzeichnet, dass** in der zweiten Verfahrensstufe das Oberflächen-Volumenverhältnis größer als das der ersten Verfahrensstufe ist.

5. Verfahren gemäß einem der Ansprüche 1 bis 4, **dadurch gekennzeichnet, dass** in der zweiten Verfahrensstufe die gemäß erster Verfahrensstufe hergestellten Massen einer Vakuumbehandlung bei erhöhter Temperatur unterworfen sind.

## Claims

1. Process for the production of parent compositions with viscosity from 500 000 to 12 000 000 mPa*s, measured at 25°C and at a shear rate of 1 s-¹, **characterized in that**, in a first stage of the process,
- at least one diorganopolysiloxane (A) of the general formula (I)
R¹ₐR²_{b}SiO_{(4-a-b)/2} (I)
where
**R¹** is a hydroxy moiety or a monovalent, option- ally halogen-substituted hydrocarbon moiety which has from 1 to 20 carbon atoms and which optionally contains O atoms, N atoms, S atoms, or P atoms, and which is free from aliphatically unsaturated groups,
**R²** is a monovalent, aliphatically unsaturated, optionally halogen-substituted hydrocarbon moiety which has from 2 to 10 carbon atoms and which optionally contains O atoms, N atoms, S atoms, or P atoms,
**b** is values from 0.0001 to 2,
with the proviso that 1.5<(**a+b**)≤3.0 and that there is an average of at least two aliphatically unsaturated moieties **R²** per molecule, and that the viscosity of the diorganopolysiloxanes (A), determined at 25°C, is from 1 to 40 000 000 mPa*s,
and
- at least one prehydrophobized oxidic reinforcing filler (B) having at least 0.5% by weight carbon content gained via the hydrophobizing process,
are homogeneously mixed and kneaded with one another in a kneading cascade (1) with at least two kneading chambers (2) arranged alongside one another in series, and each of these comprises, parallel to the axis, two kneading units (3) driven so as to co- or counterrotate, and has connection to the other kneading chamber(s) via passage apertures (5) running perpendicularly with respect to the axes (4) of the kneading units (3), where at least the first kneading chamber has a supply aperture (6) and the last kneading chamber has a discharge aperture (7),
and the resultant composition
is subjected in a second downstream stage of the process, to aftertreatment in a mixing apparatus (8), which has a supply aperture (9), by way of which the composition produced by way of the first stage of the process is introduced at a defined volume flow rate X to the mixing apparatus (8), subjected to shear force and devolatilized, with constant renewal of the surface (14), with use of rotating mixing/kneading units (10), and also optionally of scrapers (19), and is discharged from the second stage of the process by way of a discharge aperture (11) at the volume flow rate Y.

2. Process according to Claim 1, **characterized in that** the average residence time of the parent composition is longer in the second stage of the process than in the first stage of the process.

3. Process according to Claim 1 or 2, **characterized in that** the second stage of the process has subjected the compositions produced in the first stage of the process to a mixing procedure in which the shear force introduced is smaller than in the first stage of the process.

4. Process according to any of Claims 1 to 3, **characterized in that** the surface-area-to-volume ratio is greater in the second stage of the process than in the first stage of the process.

5. Process according to any of Claims 1 to 4, **characterized in that** the second stage of the process subjects the compositions produced in the first stage of the process to vacuum treatment at an elevated temperature.

## Revendications

1. Procédé pour la production de matières de base ayant une viscosité de 500 000 à 12 000 000 mPa*s, mesurée à 25 °C et à une vitesse de cisaillement de 1 s⁻¹, **caractérisé en ce qu'**on mélange entre eux et malaxe de façon homogène
- au moins un diorganopolysiloxane (A) de formule générale (I)
R¹ₐR²_{b}SiO_{(4-a-b)/2} (I)
dans laquelle,
**R¹** est un radical hydroxy ou un radical hydrocarboné monovalent ayant de 1 à 20 atomes de carbone, éventuellement substitué par halogène, contenant éventuellement des atomes d'oxygène, d'azote, de soufre ou de phosphore, qui est exempt de groupes à insaturation aliphatique,
**R²** représente un radical hydrocarboné monovalent à insaturation aliphatique, ayant de 2 à 10 atomes de carbone, éventuellement substitué par halogène, contenant éventuellement des atomes d'oxygène, d'azote, de soufre ou de phosphore,
**b** représente des valeurs de 0,0001 à 2,
étant entendu que 1,5< (**a+b**) ≤3,0 et qu'en moyenne au moins deux radicaux à insaturation aliphatique **R²** sont contenus par molécule et que la viscosité des diorganopolysiloxanes (A), déterminée à 25 °C, vaut de 1 à 40 000 000 mPa*s,
avec
- au moins une charge de renfort (B) de type oxyde préalablement rendue hydrophobe, ayant une teneur en carbone, obtenue par l'hydrophobisation, d'au moins 0,5 % en poids,
dans un premier stade du procédé dans une cascade de malaxage (1) comportant au moins deux chambres de malaxage (2) disposées en série les unes à côté des autres, qui contiennent chacune deux outils de malaxage (3) à axes parallèles, actionnés dans le même sens ou en sens contraire, et qui sont reliées entre elles par des orifices (5) pouvant être traversés transversalement par rapport aux axes (4) des outils de malaxage (3), au moins la première chambre de malaxage comportant un orifice d'alimentation (6) et la dernière chambre de malaxage comportant un orifice de décharge (7),
et la matière ainsi obtenue,
est soumise, dans un deuxième stade du procédé raccordé en aval, à un post-traitement dans un dispositif d'agitation (8) qui est doté d'un orifice d'alimentation (9), par lequel la matière produite dans le premier stade du procédé est envoyée avec un débit volumique X défini au dispositif d'agitation (8), est exposée à une force de cisaillement et dégazée avec renouvellement constant de la surface (14), à l'aide d'outils rotatifs de mélange/malaxage (10) ainsi qu'en option de racles (19), et est déchargée du deuxième stade du procédé par un orifice de décharge (11) au débit volumique Y.

2. Procédé selon la revendication 1, **caractérisé en ce que** le temps de séjour moyen de la matière de base dans le deuxième stade du procédé est plus long que dans le premier stade du procédé.

3. Procédé selon l'une quelconque des revendications 1 à 2, **caractérisé en ce que** dans le deuxième stade du procédé les matières produites selon le premier stade du procédé sont soumises à un processus d'agitation à plus faible apport de force de cisaillement que dans le premier stade du procédé.

4. Procédé selon l'une quelconque des revendications 1 à 3, **caractérisé en ce que** dans le deuxième stade du procédé le rapport surface-volume est supérieur à celui du premier stade du procédé.

5. Procédé selon l'une quelconque des revendications 1 à 4, **caractérisé en ce que** dans le deuxième stade du procédé les matières produites selon le premier stade du procédé sont soumises à un traitement sous vide à température élevée.
